# EUROPEAN PATENT APPLICATION

(11) **EP 2 818 335 A1**
(43) Date of publication of application: **31.12.2014**
(21) Application number: 13751801.5
(22) Date of filing: 06.02.2013
(51) Int. Cl.: B60C 13/00

(54) **PNEUMATIC TIRE**

(30) Priority: 24.02.2012 JP 2012039269
(71) Applicant: Bridgestone Corporation, Tokyo 104-8340 (JP)
(72) Inventor: MIYASAKA, Atsushi, Kodaira-shi Tokyo 187-8531 (JP); NAKAMURA, Yuki, Kodaira-shi Tokyo 187-8531 (JP); TORISU, Kojiro, Kodaira-shi Tokyo 187-8531 (JP)
(74) Representative: Oxley, Robin John George
(86) International application number: PCT/JP2013/000631
(87) International publication number: WO 2013/125165

(57) **Abstract**

A pneumatic tire, comprising: a pair of bead portions each having a bead core embedded therein; a pair of sidewall portions respectively extending on the outer side in the tire radial direction from the pair of bead portions; and a tread portion extending across the respective sidewall portions, is characterized in that: the tire further comprises a ring-shaped decorative portion provided on a side portion including the bead portion and the corresponding sidewall portion, wherein the ring-shaped decorative portion has at least two decorative elements provided in the tire circumferential direction such that average brightness and/or average hue is different between the decorative elements, and the average brightness of each decorative element is at least 20%.

## Description

### TECHNICAL FIELD

The present invention relates to a pneumatic tire having a ring-shaped decorative portion provided on an outer surface of a side portion including a sidewall portion and a bead portion thereof.

### BACKGROUND ART

Examples of decorations provided at a side portion of a pneumatic tire include those provided by printing, painting or attaching a sticker on the side portion and those provided by decoratively embedding what is called color rubbers in the side portion.

In this connection, in a case where decorations are provided in a portion in the tire circumferential direction of a side portion of a pneumatic tire, satisfactory decorativeness of the tire may not be ensured when a vehicle having the pneumatic tire mounted thereon is driven because the decorations are then assimilated into the base color of the tire to become visually unrecognizable, although the decorations can improve decorativeness of the tire when the vehicle stands still.

A pneumatic tire disclosed in PTL 1, having an annular colored decorative portion in a side portion thereof, can ensure similar decorativeness when a vehicle having the tire mounted thereon stands still and when the vehicle is driven, equally. However, the pneumatic tire of PTL 1 has a problem in that the decorations of the tire are monotonous and fail to achieve satisfactory decorativeness.

### CITATION LIST

### Patent Literature

PTL 1: JP04-121205

### SUMMARY OF THE INVENTION

### Technical Problems

The present inventions aims at advantageously solving the aforementioned problem of the conventional tire having decorations provided on an outer surface of a side portion thereof. An object of the present invention is therefore to provide a tire capable of: exhibiting satisfactory decorativeness when a vehicle having the tire mounted thereon is driven, as well as when the vehicle stands still and; and causing a significant change in appearance thereof between a state where the vehicle stands still and a state where the vehicle is driven.

### Solution to the Problems

Specifically, the present inventions provides a pneumatic tire, comprising: a pair of bead portions each having a bead core embedded therein; a pair of sidewall portions respectively extending on the outer side in the tire radial direction from the pair of bead portions; and a tread portion extending across the respective sidewall portions, characterized in that:
the tire further comprises a ring-shaped decorative portion provided on a side portion including the bead portion and the corresponding sidewall portion,
wherein the ring-shaped decorative portion has at least two decorative elements provided in the tire circumferential direction such that average brightness and/or average hue is different between the decorative elements, and
the average brightness of each decorative element is at least 20%.

In the present invention, brightness, saturation, and hue are defined according to the HSV model, respectively.
"Brightness" is an index indicating brightness of a color. Brightness 100% represents the brightest color and brightness 0% represents pitch black in each hue. "Saturation" is an index indicating purity of a color in the range of 0% to 100%. A color having high saturation is a pure color, while a color having low saturation is a dull color. "Hue" is an index indicating which angle (0° to 360°) in spectrum a color corresponds to, wherein red corresponds to 0° and yellow, green, cyan, blue, magenta correspond to 60°, 120°, 180°, 240°, 300°, respectively. A combination of brightness, saturation and hue constitutes a "color".
Brightness, saturation and hue are calculated by: first measuring brightness, saturation and hue of an object to be measured in a color system other than HSV color system (e.g. Lab color space) by using a spectrophotometer manufactured by, e.g. Konika Minolta, Inc; and converting the brightness, saturation and hue of the object thus measured into those of HSV color system by using a required software such as "photoshop"®.
In the present invention, "average brightness" represents the average value of brightness in each decorative element; "average hue" represents the average value of hue in each decorative element; and it is acceptable to dispose a mark or the like having a color different from the surroundings in each decorative element.

Measurement of the respective dimensions are to be carried out, unless otherwise specified in particular, in a state where a tire is assembled with a prescribed rim and inflated at predetermined internal pressure with no load exerted thereon in the present specification and the claims appended thereto.
A "prescribed rim" represents a rim prescribed for each tire by an industrial standard which is valid in an area where the tire is manufactured and used. Examples of the industrial standard include: YEAR BOOK of JATMA (The Japan Automobile Tyre Manufacturers Association, Inc.) in Japan; STANDARDS MANUAL of ETRTO (European Tyre and Rim Technical Organisation) in Europe; and YEAR BOOK of TRA (THE TIRE and RIM ASSOCIATION INC.) in the United States.
"Predetermined internal pressure" represents the charge air pressure (the maximum air pressure) corresponding to the maximum loading capacity of a tire, prescribed according to the size of the tire by the aforementioned industrial standards such as JATMA. "The maximum loading capacity" of a tire represents the maximum mass allowed to be exerted on the tire according to the aforementioned industrial standards.
The aforementioned "air" may be replaced with inert gas such as nitrogen gas in the present invention.
Further, "cross sectional height of a tire" represents 1/2 of difference between the outer diameter of the tire and the rim diameter of the prescribed rim in the present invention. Advantageous Effect of the Invention

According to the pneumatic tire of the present invention, it is possible to provide a tire capable of: exhibiting satisfactory decorativeness when a vehicle having the tire mounted thereon is driven, as well as when the vehicle stands still and; and causing a significant change in appearance thereof between a state where the vehicle stands still and a state where the vehicle is driven.

### BRIEF DESCRIPTION OF THE DRAWINGS

FIG. 1 is a cross sectional view in the tire width direction of one half portion of a tire according to a first embodiment of the present invention in a state where the tire has been assembled with a prescribed rim and inflated at predetermined internal pressure with no load exerted thereon. The other half portion of the tire may have a structure symmetrical to the structure shown in FIG. 1.
FIG. 2 is a side view (a plan view viewed in a direction of the rotation axis) of the tire shown in FIG. 1 in a state the tire has been assembled with a prescribed rim and inflated at predetermined internal pressure with no load exerted thereon.
FIG. 3 is a side view similar to FIG. 2, showing a tire according to a second embodiment of the present invention.
FIG. 4 is a side view similar to FIG. 2, showing a tire according to a third embodiment of the present invention.

### DESCRIPTION OF THE EMBODIMENTS

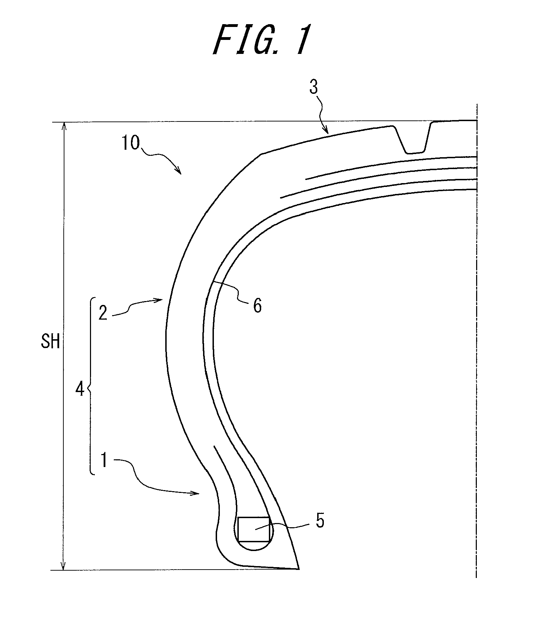

A first embodiment of the present invention will be described hereinafter with reference to the drawings.
The following explanation is provided only for a demonstrative purpose, and structures, effects and the like of respective portions of the tire of the present invention are not limited to the explanation.
A pneumatic tire 10 exemplarily shown in FIG. 1 has: a pair of bead portions 1 each having a bead core 5 embedded therein; a pair of sidewall portions 2 respectively extending on the outer side in the tire radial direction from the pair of bead portions 1; and a tread portion 3 extending across the respective sidewall portions 2.
Each bead portion 1 and the corresponding sidewall portion 2 will be collectively referred to as a "side portion 4" hereinafter.

The pneumatic tire 10 further has at least one carcass ply 6 provided possibly in a radial disposition to extend across the pair of the bead portions 1. The carcass ply 6 extends in a toroidal shape from the tread portion 3 via the pair of the sidewall portions 2 to the pair of the bead portions 1 to be folded up around and thus held by each bead core 5 embedded in each bead portion 1.

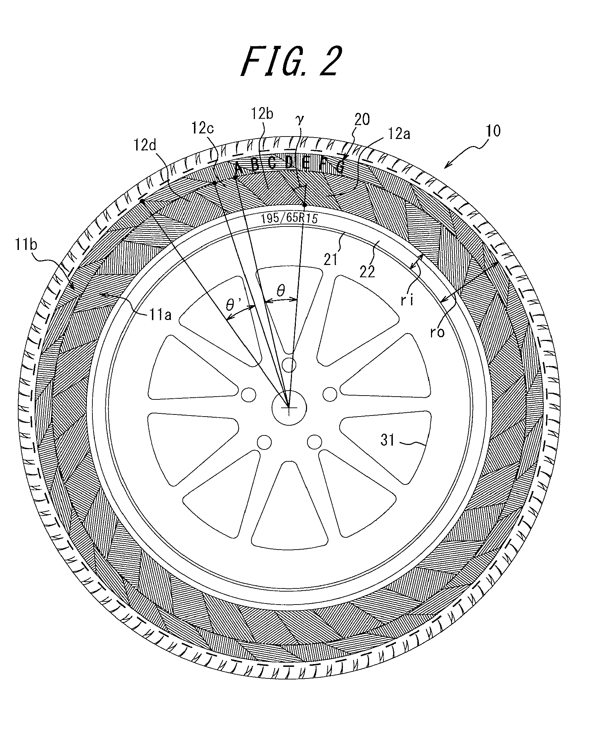

An outer surface of the side portion 4 of the pneumatic tire 10, shown with a prescribed rim 31 in FIG. 2, is provided with a ring-shaped decorative portion 11a located on the inner side in the tire radial direction and a ring-shaped decorative portion 11b located on the outer side in the tire radial direction so that the decorative portions 11a, 11b have concentric circular contours sharing the tire rotation axis as the center, respectively. The borderline between the decorative portion 11a and the decorative portions 11b is shown by a phantom line (a two dot chain line in FIG. 2).

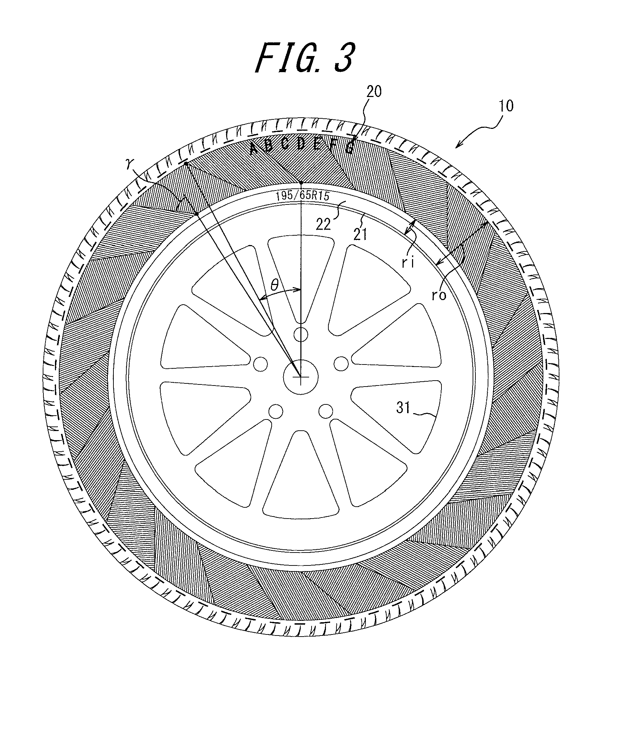

A marking-stamped region 22 between the ring-shaped decorative portion 11a and a rim line position 21 is provided with, for example, a conventional stamped marking having protruded and recessed surfaces for indicating the tire size or the like.
A mark 20 indicating a company name or the like may be provided at any portion of the outer surface of the side portion 4, although the mark 20 is formed within the ring-shaped decorative portion 11b in FIG. 2.
Alternatively, a single ring-shaped decorative portion may be provided as shown in FIG. 3, although the two ring-shaped decorative portions are provided in the tire radial direction in FIG. 2. Further, each ring-shaped decorative portion may be formed in a discontinuous, intermittent manner in the tire circumferential direction, although it is preferable to form the entire circumference of the ring-shaped decorative portion to be continuous in the tire circumferential direction in terms of satisfactorily achieving an effect of the present invention in.

In the example shown in FIG. 2, the decorative portion 11a includes decorative elements 12a 12b, 12c, 12d, ... (the rest of the reference numbers will be omitted) sequentially formed in the tire circumferential direction. The decorative portion 11b also includes decorative elements sequentially formed in the tire circumferential direction.
Colors of the decorative elements 12a 12b, 12c, 12d are blue, red, blue, red, respectively, although these colors are not clearly shown in FIG. 2. The decorative elements other than the decorative elements 12a 12b, 12c, 12d of the ring-shaped decorative portion 11a also have blue and red colors (the average hue are different therebetween) alternately in the tire circumferential direction. Decorative elements of the ring-shaped decorative portion 11b have green and purple colors (the average hue are different therebetween) alternately in the tire circumferential direction. Every decorative element of the decorative portions 11a, 11b has the average brightness of at least 20%. The decorative elements of the decorative portions 11a, 11b need not unanimously share the same brightness, although every decorative portion shares the same average brightness in the present embodiment.
In the present embodiment, a viewer feels that each of the decorative portions 11a, 11b changes appearance thereof in the tire circumferential direction and thus decorativeness of the tire 10 when a vehicle having the tire 10 mounted thereon stands still is effectively improved because each of the decorative portions 11a, 11b includes a plurality of the decorative elements provided in the tire circumferential direction such that average brightness and/or average hue is different between the decorative elements. Further, good decorativeness of the tire 10 is ensured when the vehicle having the tire 10 mounted thereon is driven, as well, because the colors of the decorative elements are mixed by rotation of the tire. Yet further, the appearance of the tire 10 when the vehicle stands still and the appearance of the tire 10 when the vehicle is driven can be made significantly different in the present embodiment.
Yet further, it is possible to attain satisfactory visual recognizability of the decorative elements when the vehicle having the tire 10 mounted thereon stands still and also prevent the decorative elements from being assimilated into the substantially black base color of the tire when the vehicle having the tire 10 mounted thereon is driven, to attain satisfactory visual recognizability of decorations when the vehicle is driven, by setting the average brightness of each decorative element to be at least 20%.

Hatching provided in each of the decorative elements simply represents that the decorative element takes on a specific single color in FIG. 2. That is, the decorative elements may include patterns therein.

Next, the appearance of the tire 10 when a vehicle having the tire 10 mounted thereon is driven will be described. When the tire 10 is rotated at speed no longer allowing a viewer to recognize the individual decorative elements formed in the tire circumferential direction of the decorative portion, the colors of the decorative elements adjacent to each other are mixed (color mixing through rotation), thereby causing the decorative portion to apparently take on a new color. The ring-shaped decorative portion 11a will look purple and the ring-shaped decorative portion 11b will look dark green in the tire exemplarily shown in FIG. 2.
When a vehicle having the tire 10 mounted thereon is driven, the borders between the decorative elements are made invisible due to color mixing through rotation so that the decorative portion 11a and the decorative portion 11b of the side portion are each visually recognized by a viewer to take on a single color, which improves decorativeness of the tire.
Further, the decorative elements are prevented from being assimilated into the substantially black base color of the tire when the vehicle is driven, to attain satisfactory visual recognizability of decorations when the vehicle is driven, by setting the average brightness of each decorative element to be at least 20%.
In the case of tire exemplarily shown in FIG. 2, mounting the tire on a vehicle such that the tire is rotated anticlockwise in the drawing when the vehicle is driven prevents a viewer from feeling odd due to disagreement between change in decorations and the running direction of the vehicle, thereby providing the viewer with a natural impression.

Further, the appearance of the tire when the vehicle stands still and the appearance of the tire when the vehicle is driven can be made significantly different in the tire shown in FIG. 2, which contributes to making a viewer have a vivid impression on each of the tire in a stand-still state and the tire in a driven state.

In the tire 10 of the present embodiment shown in FIG. 2, a central angle defined at the rotation axis of the tire as the center to interpose respective ends in the tire circumferential direction of each decorative element of the ring-shaped decorative portion 11a, i.e. an angle θ formed by a line linking one end in the tire circumferential direction of each decorative element and the rotation axis of the tire and a line linking the other end in the tire circumferential direction of the decorative element and the rotation axis of the tire, is set to be in the range of 5° to 90°. As a result, it is possible to make the appearance of the tire when a vehicle having the tire 10 mounted thereon stands still significantly different from the appearance of the tire 10 when the vehicle is driven and achieve satisfactory color mixing through rotation between the decoration elements when the vehicle is driven at speed in the range of 30 km/hour to 60 km/hour, which range is a general speed range of a vehicle, thereby further improving decorativeness of the tire. Specifically, the appearance of the tire when a vehicle having the tire 10 mounted thereon stands still may not be so different from the appearance of the tire 10 when the vehicle is driven and thus decorativeness of the tire may not be satisfactorily improved when the aforementioned angle θ is less than 5°. Satisfactory color mixing through rotation between the decoration elements may fail to occur when the vehicle is driven at speed in the range of 30 km/hour to 60 km/hour, which range is a general driving speed range of a vehicle, thereby deteriorating decorativeness of the tire, when the aforementioned angle θ exceeds 90°.
In general, the smaller angle θ allows an effect of color mixing through rotation to be obtained at the lower rotation speed of the tire.

Further, it is preferable that the respective two decorative elements adjacent to each other in the tire circumferential direction (e.g. the decorative elements 12a, 12b in FIG. 2) have difference in the average brightness therebetween of at least 20% and/or difference in the average hue therebetween of at least 10°. In this case, the appearance of the ring-shaped decorative portion 11a sufficiently varies along the circumference thereof, so that decorativeness of the tire 10 further improves in both of the state where a vehicle having the tire 10 mounted thereon stands still and the state where the vehicle is driven; and the appearance of the tire when a vehicle having the tire 10 mounted thereon stands still and the appearance of the tire 10 when the vehicle is driven can be made significantly different, so that decorativeness of the tire further improves as a whole.
In this connection, it is more preferable that the respective two decorative elements adjacent to each other in the tire circumferential direction exhibit difference in the average brightness therebetween of at least 20%, as well as difference in the average hue therebetween of at least 10°, in terms of further enhancing the aforementioned good effects.

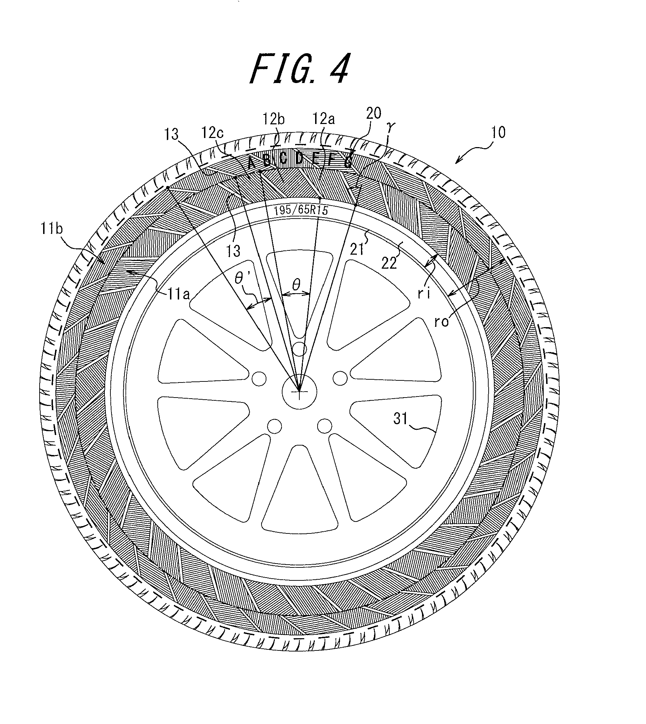

The tire 10 of a third embodiment shown in FIG. 4 has white decorative elements 13 formed adjacent to the respective sides in the tire circumferential direction of the blue decorative elements and the red decorative elements of the ring-shaped decorative portion 11a and the respective sides in the tire circumferential direction of the green decorative elements and the purple decorative elements of the ring-shaped decorative portion 11b. The decorative elements having colors other than white can be highlighted by providing the white decorative element 13 (white is the brightest color) to be adjacent to the decorative elements having colors other than white.
It is acceptable to provide the white decorative element as described above in only one of the ring-shaped decorative portion 11a and the ring-shaped decorative portion 11b.

It is preferable to dispose the innermost end in the tire radial direction of the ring-shaped decorative portion 11a located on the inner side in the tire radial direction at a tire-radial direction position distanced from the bead toe toward the outer side in the tire radial direction by "ri" (ri is ≥ 10% of a cross sectional height SH of the tire, shown in FIG. 1) and dispose the outermost end in the tire radial direction of the ring-shaped decorative portion 11b located on the outer side in the tire radial direction at a tire-radial direction position distanced from the bead toe toward the outer side in the tire radial direction by "ro" (ro is ≤ 80% of the cross sectional height SH of the tire), for example, dispose the outermost end in the tire radial direction of the ring-shaped decorative portion 11b at a tire-radial direction position distanced from the tread end by at least 5 mm because: then damage to the ring-shaped decorative portions 11a, 11b caused when the outer surface of the side portion 4 is brought into contact with a curb stone is effectively prevented from occurring so that the tire 10 can demonstrate good decorativeness for a long period; and good visual recognizability of a conventional stamped marking having protruded and recessed surfaces and formed in the marking-stamped region 22 in the vicinity of the rim line position 21 of the tire 10 for indicating the tire size or the like as described above can be ensured. In other words, if the innermost end in the tire radial direction of the ring-shaped decorative portion 11a is disposed on the inner side in the tire radial direction than the position distanced from the bead toe toward the outer side in the tire radial direction by 10% of the cross sectional height SH of the tire, the ring-shaped decorative portion may overlap the stamped marking provided in the vicinity of the rim line, thereby deteriorating visual recognizability of the stamped marking. If the outermost end in the tire radial direction of the ring-shaped decorative portion 11b is disposed on the outer side in the tire radial direction than the position distanced from the bead toe toward the outer side in the tire radial direction by 80% of the cross sectional height SH of the tire, the outer surface of the side portion 4 may be brought into contact with a curb stone when the tire 10 is in use, which possibly causes the ring-shaped decorative portions 11a, 11b to be damaged to deteriorate decorativeness of the tire.

In the respective two decorative elements adjacent to each other in the tire circumferential direction, e.g. the decorative elements 12a, 12b shown in FIG. 2, a ratio of a central angle defined at the rotation axis of the tire as the center to interpose respective ends in the tire circumferential direction of one decorative element 12a, with respect to a central angle defined at the rotation axis of the tire as the center to interpose respective ends in the tire circumferential direction of the other decorative element 12b, is preferably in the range of 0.1 to 10 because then colors of the decorative elements adjacent to each other are sufficiently mixed through rotation, to further improve decorativeness of the tire 10, when the a vehicle having the tire 10 mounted thereon is driven.

In the tire 10 shown in FIG. 2, the ring-shaped decorative portion 11a is formed by alternately providing in the tire circumferential direction the blue decorative elements and the red decorative elements of which central angles, each defined at the rotation axis of the tire as the center to interpose respective ends in the tire circumferential direction of the corresponding decorative element, are substantially equal. Similarly, the ring-shaped decorative portion 11b is formed by alternately providing in the tire circumferential direction the green decorative elements and the purple decorative elements of which central angles, each defined at the rotation axis of the tire as the center to interpose respective ends in the tire circumferential direction of the corresponding decorative element, are substantially equal.
In this case, color mixing through rotation is facilitated in the decorative elements when a vehicle having the tire 10 mounted thereon is driven, thereby reliably improving decorativeness of the tire mounted on the vehicle even when the vehicle runs at relatively low speed.
In the tire shown in FIG. 2, each of the ring-shaped decorative portions is formed by alternately disposing in the tire circumferential direction two types of decorative elements in which average brightness values or average hue values are different therebetween. However, a similar effect can be obtained by alternately disposing in the tire circumferential direction three or more types of decorative elements having different average brightness values or different average hue values. In this connection, the effect can be further enhanced by differentiating both average brightness and average hue between the adjacent decorative elements.

In the present invention, it is preferable that in a plan view of the tire viewed in a direction of the rotation axis of the tire at least some of the borders between the decorative elements adjacent to each other, e.g. the borders between the decorative elements of the ring-shaped decorative portion 11a shown in FIG. 2, are inclined with respect to the tire radial direction by an inclination angle γ so that the decorative elements overlap each other in the tire radial direction because then change in colors in the tire radial direction in the decorations of the tire, which change is visually recognized when a vehicle having the tire mounted thereon is driven, is satisfactorily made smooth and decorativeness of the tire further improves.

The tire 10 shown in FIG. 2 has the two ring-shaped decorative portions 11a, 11b in the tire radial direction. The ring-shaped decorative portion 11a has blue and red decorative elements and the ring-shaped decorative portion 11b has green and purple decorative elements such that the colors of the decorative elements of the ring-shaped decorative portion 11a are different from the colors of the decorative elements of the ring-shaped decorative portion 11b.

It is possible to change colors of the decoration in the tire radial direction and further improve decorativeness of the tire 10 by differentiating the color (at least one of the average brightness and the average hue, in particular) of one ring-shaped decorative portion 11a from the color of one ring-shaped decorative portion 11b

Further, it is possible to cause the ring-shaped decorative portions 11a, 11b to exhibit the color-mixing effect through rotation thereof most effectively at different rotational speed, respectively, by differentiating a central angle θ defined at the rotation axis of the tire as the center to interpose respective ends in the tire circumferential direction of each decorative element of the ring-shaped decorative portion 11a from the corresponding central angle θ' of each decorative element of the ring-shaped decorative portion 11b, so that the appearances of the ring-shaped decorative portions 11a, 11b change in different manners, respectively, in accordance with the speed of the vehicle having the tire mounted thereon.

The ring-shaped decorative portion of the pneumatic tire of the present invention can be formed by printing, painting, or attaching a sticker or the like. Formation of the ring-shaped decorative portion by printing is preferable in terms of attaining good decorativeness and easy production.

### Examples

Test tires of Examples 1 to 11 according to the present invention and test tires of Comparative Examples 1 to 3 were prepared. Decorativeness of each of the test tires, felt by viewers, was then investigated by mounting the tire on a vehicle and visually confirming the decorativeness of the tire when the vehicle stood still and when the vehicle was driven, respectively.
Specifically, 30 viewers observed each of the test tires and evaluated decorativeness of the tire when the vehicle stood still, decorativeness of the tire when the vehicle was driven at 45 km/hour, and change in appearance of the tire between the stand-still state and the driven state thereof in the form of a questionnaire survey. The results of the evaluation are shown in Tables 1-1 and 1-2. The decorativeness of the tire when the vehicle stood still, the decorativeness of the tire when the vehicle was driven, and the change in appearance of the tire between the stand-still state and the driven state thereof thus investigated, of each of the test tires, are expressed as indices relative to the corresponding investigation results of Comparative Example 1 each being "100". Regarding the decorativeness of the tire when the vehicle stood still and the decorativeness of the tire when the vehicle was driven, the larger index value represents the better evaluation on decorativeness by the viewers. Regarding the change in appearance of the tire between the stand-still state and the driven state thereof, the larger index value represents the larger change felt by the viewers.

The test tires of Examples 1 to 11 and Comparative Examples 1 to 3 were each prepared as a tire as shown in FIG. 3 and each had size: 195/65R15, cross sectional height SH of the tire: 128 mm, and a single ring-shaped decorative portion formed on a side portion thereof. The distance (ri) measured from the bead toe to the innermost end in the tire radial direction and the distance (ro) measured from the bead toe to the outermost end in the tire radial direction of the ring-shaped decorative portion are 30 mm (23% of SH) and 100 mm (78% of SH), respectively.

The test tires of Examples 1 to 11 and Comparative Examples 2 and 3 were each provided with decorative element 1 and decorative element 2 having characteristics shown in Tables 1-1 and 1-2 and alternately disposed in the tire circumferential direction. The specific characteristics of the decorative elements 1, 2 are shown in Tables 1-1 and 1-2. Brightness, saturation, and hue shown in Tables 1-1 and 1-2 represent the average brightness, the average saturation, and the average hue, respectively.
The ring-shaped decorative portion of Comparative Example 1, in contrast, had monocolor thereon.

**Table 1-1**

| | | Example 1 tire | Example 2 tire | Example 3 tire | Example 4 tire | Example 5 tire | Example 6 tire |
|---|---|---|---|---|---|---|---|
| Decorative element 1 | Color | Blue (Brightness 90%, Saturation 100%, Hue 240°) | | | | | |
| | θ (°) | 45 | 4 | 5 | 90 | 95 | 45 |
| Decorative element 2 | Color | Red (Brightness 70%, Saturation 80%, Hue 0°) | | | | | |
| | θ (°) | 45 | 4 | 5 | 90 | 95 | 45 |
| Ratio of central angle defined at rotation axis of tire as the center to interpose respective ends in tire circumferential direction of one decorative element with respect to corresponding central angle of another decorative element | | 1 | 1 | 1 | 1 | 1 | 1 |
| Inclination angle γ (°) | | 30 | 30 | 30 | 30 | 30 | 30 |
| Decorativeness | Stand-still state | 170 | 180 | 180 | 150 | 150 | 170 |
| | Driven state | 145 | 160 | 155 | 140 | 140 | 140 |
| Change in appearance between stand-still state and driven state | | 180 | 170 | 175 | 170 | 170 | 180 |

**Table 1-2**

| | | Example 7 tire | Example 8 tire | Example 9 tire | Example 10 tire | Example 11 tire | Comp. Example 1 tire | Comp. Example 2 tire | Comp. Example 3 tire |
|---|---|---|---|---|---|---|---|---|---|
| Decorative element 1 | Color | Blue (Brightness 90%, Saturation 100%, Hue 240°) | | | | | | Blue (Brightness 15%, Saturation 100%, Hue 240°) | |
| | θ (°) | 45 | 4.5 | 4.5 | 4.0 | 4.5 | 45 | 45 | 45 |
| Decorative element 2 | Color | Red (Brightness 80%, Saturation 80%, Hue 5°) | Red (Brightness 100%, Saturation 80%, Hue 0°) | | | | - | Red (Brightness 15%, Saturation 80%, Hue 0°) | Red (Brightness 25%, Saturation 80%, Hue 0°) |
| | θ (°) | 45 | 12.5 | 45 | 45 | 12.5 | - | 45 | 45 |
| Ratio of central angle defined at rotation axis of tire as the center to interpose respective ends in tire circumferential direction of one decorative element with respect to corresponding central angle of another decorative element | | 1 | 5 | 10 | 11 | 5 | 5 | 1 | 1 |
| Inclination angle γ (°) | | 30 | 30 | 30 | 30 | 0 | 30 | - | - |
| Decorativeness | Stand-still state | 130 | 170 | 160 | 160 | 150 | 100 | 105 | 105 |
| | Driven state | 110 | 130 | 110 | 105 | 125 | 100 | 100 | 100 |
| Change in appearance between stand-still state and driven state | | 120 | 140 | 115 | 105 | 130 | 100 | 100 | 100 |

It has been revealed from the test results that the Example tires, each having a plurality of decorative elements provided in the tire circumferential direction such that average brightness or average hue is different between the decorative elements and the average brightness of each decorative element is at least 20%, unanimously exhibit improvement in both the decorativeness when the vehicle stands still and the decorativeness when the vehicle is driven thereof, as well as significant change in appearance between the stand-still state and the driven state thereof.

### REFERENCE SIGNS LIST

- 1: Bead portion
- 2: Sidewall portion
- 3: Tread portion
- 4: Side portion
- 5: Bead core
- 6: Carcass ply
- 10: Tire
- 11a, 11b: Ring-shaped decorative portion
- 12a to 12d: Decorative element
- 13: Decorative element
- 20: Mark
- 21: Rim line position
- 22: Marking-stamped region
- 31: Prescribed rim
- θ, θ': Central angle defined at rotation axis of tire as the center to interpose respective ends in the tire circumferential direction of each decorative element
- γ: Inclination angle of border between adjacent decorative elements with respect to tire radial direction
- SH: Cross sectional height of tire
- ri: Distance measured in tire radial direction from bead toe to the innermost end in tire radial direction of ring-shaped decorative portion
- ro: Distance measured in tire radial direction from bead toe to the outermost end in tire radial direction of ring-shaped decorative portion

## Claims

1. A pneumatic tire, comprising: a pair of bead portions each having a bead core embedded therein; a pair of sidewall portions respectively extending on the outer side in the tire radial direction from the pair of bead portions; and a tread portion extending across the respective sidewall portions, **characterized in that**:
the tire further comprises ring-shaped decorative portion provided on a side portion including the bead portion and the corresponding sidewall portion,
wherein the ring-shaped decorative portion has at least two decorative elements provided in the tire circumferential direction such that average brightness and/or average hue is different between the decorative elements, and
the average brightness of each decorative element is at least 20%.

2. The pneumatic tire of claim 1, wherein a central angle defined at the rotation axis of the tire as the center to interpose respective ends in the tire circumferential direction of each decorative element is set to be in the range of 5° to 90° in a plan view of the tire viewed in a direction of the rotation axis.

3. The pneumatic tire of claim 1 or 2, wherein the respective two decorative elements adjacent to each other in the tire circumferential direction have difference in the average brightness therebetween of at least 20% and/or difference in the average hue therebetween of at least 10°.

4. The pneumatic tire of any of claims 1 to 3, wherein the innermost end in the tire radial direction of the ring-shaped decorative portion is disposed at a tire-radial direction position distanced from the bead toe toward the outer side in the tire radial direction by 10% or more of a cross sectional height of the tire, and
the outermost end in the tire radial direction of the ring-shaped decorative portion is disposed at a tire-radial direction position distanced from the bead toe toward the outer side in the tire radial direction by 80% or less of the cross sectional height of the tire.

5. The pneumatic tire of any of claims 1 to 4, wherein, in the respective two decorative elements adjacent to each other in the tire circumferential direction, a ratio of a central angle defined at the rotation axis of the tire as the center to interpose respective ends in the tire circumferential direction of one decorative element, with respect to a central angle defined at the rotation axis of the tire as the center to interpose respective ends in the tire circumferential direction of the other decorative element, is set to be in the range of 0.1 to 10.

6. The pneumatic tire of any of claims 1 to 5, wherein the at least two decorative elements in which average brightness and/or average hue is different therebetween have substantially equal central angles each defined at the rotation axis of the tire as the center to interpose respective ends in the tire circumferential direction of the corresponding decorative element, and the ring-shaped decorative portion is formed by alternately disposing these decorative elements in the tire circumferential direction.

7. The pneumatic tire of any of claims 1 to 6, wherein at least some of borders between the decorative elements adjacent to each other are inclined with respect to the tire radial direction in a plan view of the tire viewed in a direction of the rotation axis of the tire.

8. The pneumatic tire of any of claims 1 to 7, wherein the tire comprises a plurality of ring-shaped decorative portions concentrically provided in the tire radial direction, each of the ring-shaped decorative portions has at least one decorative element, and the at least one decorative element of one ring-shaped decorative portion differs from the at least one decorative element of another ring-shaped decorative portion in terms of average brightness and/or average hue thereof.
